# EUROPÄISCHE PATENTSCHRIFT

(11) **EP 3 865 746 B1**
(45) Veröffentlichungstag und Bekanntmachung des Hinweises auf die Patenterteilung: **01.12.2021**
(21) Anmeldenummer: 20157531.3
(22) Anmeldetag: 14.02.2020
(51) Int. Cl.: F16K 1/44, F16K 31/06, F16K 39/02, F16K 1/38, F16K 27/00

(54) **ELEKTROHYDRAULISCHES STEUERVENTIL**
ELECTROHYDRAULIC CONTROL VALVE
SOUPAPE DE COMMANDE ÉLECTROHYDRAULIQUE

(43) Veröffentlichungstag der Anmeldung: 18.08.2021
(73) Patentinhaber: Kosean, Werner, 23611 Bad Schwartau (DE)
(72) Erfinder: Kosean, Werner, 23611 Bad Schwartau (DE)
(74) Vertreter: Naessens, Stephan

(56) Entgegenhaltungen:
- DE-A1-102005 014 418
- DE-A1-102013 216 568
- DE-A1-102013 217 580
- DE-A1-102016 104 135
- DE-B3-102007 010 213
- DE-T2- 69 804 426
- US-A- 5 188 073
- US-A- 6 073 652
- US-A1- 2007 157 980

## Beschreibung

Die vorliegende Erfindung betrifft ein elektrohydraulisches Steuerventil mit zumindest einem Zufluss und einem Abfluss in einem Gehäuseblock und mit einem elektrisch ansteuerbaren Steuerkolben, der in einer Gehäusebohrung axial bewegbar geführt ist, wobei der federbelastete Steuerkolben mit einem Ventilkegel gegen einen Ventilsitz steuerbar ist. Ferner betrifft die Erfindung eine Anordnung mit mehreren elektrohydraulischen Steuerventilen.

Derartige elektrohydraulische Steuerventile sind z. B. als Wegeventile zum Steuern und/oder Regeln eines Fluidstromes bekannt. Um beispielsweise einen angeschlossenen Verbraucher über eine ebenfalls angeschlossene Pumpe mit Fluid bzw. Öl zu versorgen, wird das elektrohydraulische Steuerventil beispielsweise über einen Elektromagnet angesteuert, um im geöffneten Zustand durch einen zwischen dem Ventilkegel und dem Ventilsitz gebildeten Spalt mit Öl zu versorgen. Es hat sich hierbei gezeigt, dass eine Ansteuerung erforderlich ist, um beispielsweise zu verhindern, dass es während des Betriebes zu unerwünschten Schlägen zwischen Ventilkegel und Ventilsitz kommt. Hierzu werden üblicherweise zusätzliche Ansteuerventile oder dergleichen Bauteile eingesetzt, die dem elektrohydraulischen Steuerventil vorgeschaltet sind. Durch die Verwendung von zusätzlichen Ansteuerventilen werden der konstruktive Aufwand sowie die Herstellungskosten negativ beeinflusst.

Aus der Druckschrift US 6 073 652 A ist ein elektrohydraulisches Steuerventil mit einem Zufluss und einem Abfluss in einem Gehäuseblock und mit einem elektrisch ansteuerbaren Steuerkolben bekannt, der in einer Gehäusebohrung axial bewegbar geführt ist, wobei der federbelastete Steuerkolben mit einem Ventilkegel gegen ein Ventilsitz steuerbar ist. Zum Ansteuern des Steuerkolbens ist ein Steuerkegel vorgesehen, der relativ zum Steuerkolben bewegbar angeordnet ist, wobei der Steuerkegel in Anlage mit dem Steuerkolben bringbar ist. Ferner steht der Steuerkegel mit einem Magnetanker eines Betätigungsantriebes zum axialen Bewegung in Wirkverbindung.

Ferner werden weitere Ventilanordnungen durch die Druckschriften US 5 188 073 A, US 2007/157980 A1, DE 698 04 426 T2 und DE 10 2013 217 580 A1 offenbart.

Der vorliegenden Erfindung liegt die Aufgabe zugrunde ein elektrohydraulisches Steuerventil und eine Anordnung mit zumindest einem elektrohydraulischen Steuerventil sowie ein Verfahren vorzuschlagen, mit denen die Betriebsweise des Steuerventils optimiert wird.

Diese Aufgabe wird erfindungsgemäß durch die Merkmale des Patentanspruches 1 bzw. 8 bzw. 10 gelöst, wobei sich vorteilhafte und beanspruchte Weiterbildungen aus den jeweiligen Unteransprüchen und der Beschreibung sowie den Zeichnungen ergeben.

Demzufolge wird ein elektrohydraulisches Steuerventil bzw. Wegeventil zum Steuern und/oder Regeln eines Fluidstromes mit zumindest einem Zufluss und einem Abfluss in einem Gehäuseblock und mit einem elektrisch ansteuerbaren Steuerkolben vorgeschlagen, der in einer Gehäusebohrung oder dergleichen axial bewegbar geführt ist. Der federbelastete Steuerkolben ist mit einem Ventilkegel gegen einen Ventilsitz steuerbar. Um ein besonders betriebsoptimiertes und konstruktiv einfach aufgebautes sowie kostengünstiges elektrohydraulisches Steuerventil vorzusehen, ist zumindest ein Steuerstift in einer Axialbohrung des Steuerkolbens zumindest abschnittsweise relativ zum Steuerkolben bewegbar angeordnet, wobei der federbelastete Steuerstift mit einem Betätigungsantrieb, z. B. einem On-OFF-Magneten, einem Proportionalmagneten oder dergleichen zum axialen Bewegen in Wirkverbindung steht.

Auf diese Weise wird eine optimierte Ansteuerung bei dem vorgeschlagenen elektrohydraulischen Steuerventil realisiert, ohne dass zusätzliche Ansteuerventile oder ähnliches erforderlich sind. Die Ansteuerung des Steuerkolbens erfolgt über den zumindest abschnittsweise relativ zum Steuerkolben bewegbaren Steuerstift. Demzufolge kann der Steuerstift zum Realisieren eines vorstimmten axialen Spiels zwischen dem Steuerkolben und dem Steuerstift relativ zum Steuerkolben in axialer Richtung bewegt werden, bis eine vorbestimmte Axialkraft auf den Steuerkolben gegen die Rückstellfederkraft wirkt, ohne dass der Steuerkolben aus seiner geschlossenen Position gebracht wird. Erst durch eine Erhöhung der Axialkraft durch den Betätigungsantrieb auf den Steuerstift wird der Steuerstift aufgrund der spielfreien Anlage an dem Steuerkolben gemeinsam mit dem Steuerkolben axial in den geöffneten Zustand bewegt. Wenn der Steuerkolben wieder geschlossen werden soll, können unerwünschte Schläge zwischen Ventilkegel und Ventilsitz durch den spielfrei an dem Steuerkolben anliegenden Steuerstift verhindert werden, da der Steuerstift zunächst eine weitere axiale Bewegung des Steuerkolbens verhindert.

Eine Möglichkeit, die Relativbewegung zwischen Steuerstift und Steuerkolben konstruktiv einfach zu ermöglichen, wird dadurch erreicht, dass der Steuerstift einen Anlageabschnitt zum axialen Anliegen an einem korrespondierenden Anlageabschnitt des Steuerkolbens aufweist, wobei die axiale Position der Anlageabschnitte derart gewählt ist, dass ein vorbestimmtes Axialspiel z.B. von etwa 0,2 mm gegeben ist, sodass eine Relativbewegung des Steuerstiftes möglich ist. Auf diese Weise kann der Steuerstift zur Ansteuerung axial relativ zum Steuerkolben bewegt werden, bis die beiden Anlageabschnitte spielfrei axial dichtend aneinanderliegen und eine Kraftübertragung vom Steuerstift zum Steuerkolben ermöglichen. Anschließend wird zum Öffnen des elektrohydraulischen Steuerventils der Steuerstift mit dem Steuerkolben axial weiterbewegt, um die geöffnete Position des Steuerkolbens zu erreichen.

Um bei dem vorgeschlagenen elektrohydraulischen Steuerventil einen Kraft- bzw. Druckausgleich zwischen den druckbeaufschlagten Enden bzw. Seiten des Steuerkolbens zu realisieren, ist vorgesehen, dass der Steuerstift eine axial verlaufende Durchgangsbohrung aufweist. Dadurch ist es jederzeit möglich, die den jeweiligen Enden des Steuerkolbens zugeordneten Räume miteinander zu verbinden, um einen druck- bzw. kraftausgleichenden Zustand in jedem Betriebsbereich des elektrohydraulischen Steuerventils zu gewährleisten. Die beiden Enden bzw. die beiden Seiten des Steuerkolbens sind mit gleicher beaufschlagter Querschnittsfläche ausgebildet.

Um eine Rückstellung des Steuerstiftes zu ermöglichen, ist vorgesehen, dass ein Ende und zwar vorzugsweise das dem Betätigungsantrieb abgewandte Ende des Steuerstiftes mit einer ersten Rückstellfeder in Wirkverbindung steht. Im Rahmen der Erfindung kann für eine konstruktiv einfache und kostengünstige Anordnung der ersten Rückstellfeder bei dem vorgeschlagenen elektrohydraulischen Steuerventil vorgesehen sein, dass die erste Rückstellfeder des Steuerstiftes in einer lösbar an einem Ende des Steuerkolbens befestigten Federkappe aufgenommen und axial abgestützt ist. Hierdurch ergibt sich zudem ein Montagevorteil, da durch z.B. einfaches Aufschrauben der Federkappe an dem zugeordneten Ende des Steuerkolbens die erste Rückstellfeder des Steuerstiftes vormontierbar ist.

Für eine Rückstellung des geöffneten Steuerkolbens in seine geschlossene Stellung kann vorgesehen sein, dass zumindest eine zweite Rückstellfeder vorgesehen ist, wobei die zweite Rückstellfeder einerseits axial an der Federkappe des Steuerkolbens und andererseits axial an dem Boden der Gehäusebohrung abgestützt ist. Demzufolge wird der Federkappe eine zusätzliche Funktion zugeordnet, da die Federkappe sowohl die erste Rückstellfeder als auch die zweite Rückstellfeder aufnimmt bzw. abstützt.

Ein weiterer Vorteil ergibt sich bei dem vorgeschlagenen elektrohydraulischen Steuerventil dadurch, dass die Federkappe derart dem Abfluss im Gehäuseblock zugeordnet ist, dass ein durch den zwischen dem Ventilkegel und dem Ventilsitz gebildeten Spalt strömendes Fluid an der Federkappe verwirbelungsfrei zum Abfluss führbar ist. Durch die vorgesehene Federkappe werden ein Umströmen der Rückstellfedern und die dadurch verursachten Verwirbelungen vermieden. Demzufolge wird die Betriebsweise des vorgeschlagenen elektrohydraulischen Steuerventils weiter optimiert.

Eine besonders vorteilhafte Ausführung der Erfindung sieht vor, dass in der Gehäusebohrung ein dem Ventilsitz bildender gehäusefester Hülseneinsatz angeordnet ist, in den der Steuerkolben axial bewegbar gelagert ist. Durch die Verwendung des Hülseneinsatzes ergeben sich weitere fertigungstechnische Vorteile, sodass insgesamt die Herstellungskosten verringert werden können. Der Hülseneinsatz weist eine dem Zulauf zugeordnete Steuerkante auf, die mit einem Feinsteuernuten aufweisenden Steuersteg des Steuerkolbens korrespondiert. Durch die Verwendung von den Feinsteuernuten ergibt sich eine verbesserte Ansteuerung in Betrieb des vorgeschlagenen elektrohydraulischen Steuerventils. Dadurch, dass einerseits durch den mit dem Ventilkegel korrespondierenden Ventilsitz und andererseits durch die mit dem Steuersteg korrespondierende Steuerkante begrenzte Kammer vorgesehen ist, ergeben sich weitere Steuerungsvorteile bei dem vorgeschlagenen elektrohydraulischen Steuerventil.

Insgesamt wird somit ein elektrohydraulisches Steuerventil vorgeschlagen, welches absolut leckölfrei ist und eine integrierte Druck- und Mengenregelung sowie eine integrierte Lasthaltefunktion umfasst. Zudem wird bei dem vorgeschlagenen Steuerventil eine geringe Wärmeentwicklung im gesamten System erzeugt und eine optimierte Reaktionszeit bei geringem Bauraumbedarf und bei geringem Gewicht realisiert.

Ein weiterer Aspekt der vorliegenden Erfindung sieht vor, dass eine Anordnung mit zumindest einem ersten elektrohydraulischen Steuerventil und einem zweiten elektrohydraulischen Steuerventil der vorbeschriebenen Art beansprucht wird. Dadurch ergibt sich ein sogenannter Doppelblock. Es ist jedoch auch möglich einen sogenannten Vierfachblock vorzusehen, bei dem dann vier elektrohydraulische Steuerventile vorgesehen und miteinander verschaltet sind.

Die vorgeschlagene Anordnung sieht vor, dass das erste elektrohydraulische Steuerventil und das zweite elektrohydraulische Steuerventil etwa parallel nebeneinander in einem Gehäuseblock bei einer Doppelblockanordnung angeordnet und miteinander verschaltet sind. Ein Zufluss des ersten elektrohydraulischen Steuerventils ist mit einer Pumpe zur Ölversorgung bzw. zur Fluidversorgung verbunden, während ein Abfluss des ersten elektrohydraulischen Steuerventils mit einem Verbraucher zum Betätigen verbunden ist. Ein Zufluss des zweiten elektrohydraulischen Steuerventils ist ebenfalls mit dem Verbraucher und damit auch mit dem Abfluss des ersten elektrohydraulischen Steuerventils verbunden, während ein Abfluss des zweiten elektrohydraulischen Steuerventils mit einem Tank verbunden ist. Auf diese Weise kann eine besonders hinsichtlich der Betriebsweise verbesserte und auch bauraumsparende Anordnung der elektrohydraulischen Steuerventile bei einem Fahrzeug oder dergleichen realisiert werden.

Bei der erfindungsgemäßen Doppelblockanordnung mit zwei Steuerventilen werden mehrere Funktionen durch eine Ventilausführung in vorteilhafterweise ermöglicht. Zudem können z. B. Rückschlagventile, Senkbremsen, Drosseln, Druckbegrenzungsventile o.ä. entfallen, wodurch die Herstellungskosten verringert werden. Bei Richtungsänderungen des Fluidstromes ist es bei der vorgeschlagenen Anordnung nicht erforderlich, dass die Steuerkolben der Steuerventile über Null fahren müssen bzw. mehrere Zustände durchlaufen müssen, da der gemeinsame Verbindungskanal zwischen den beiden Steuerventilen Richtungsänderungen des Fluidstromes ermöglicht. Hierdurch können sonst weitere erforderliche Bauteile, Rohrleitungen und Verschraubungen eingespart werden.

Ein weiterer Aspekt der vorliegenden Erfindung sieht vor, dass ein Verfahren zum Öffnen und Schließen des vorbeschriebenen elektrohydraulischen Steuerventils beansprucht wird, um einen Ansteuerzustand beim Öffnen und Schließen des Steuerventils vorzusehen, um unerwünschte Schläge zwischen dem Ventilkegel und dem Ventilsitz zu verhindern.

Nachfolgend wird die vorliegende Erfindung anhand der Zeichnungen weiter erläutert.

Es zeigen:
Figur 1 eine geschnittene Ansicht eines erfindungsgemäßen elektrohydraulischen Steuerventils in einem geöffneten Zustand;
Figur 2 bis 4 jeweils eine geschnittene Ansicht des Steuerventils im geschlossenen Zustand, im angesteuerten Zustand und im geöffneten Zustand; und
Figur 5 eine geschnittene Ansicht einer erfindungsgemäßen Anordnung eines ersten elektrohydraulischen Steuerventils und eines zweiten elektrohydraulischen Steuerventils in einem Gehäuseblock.

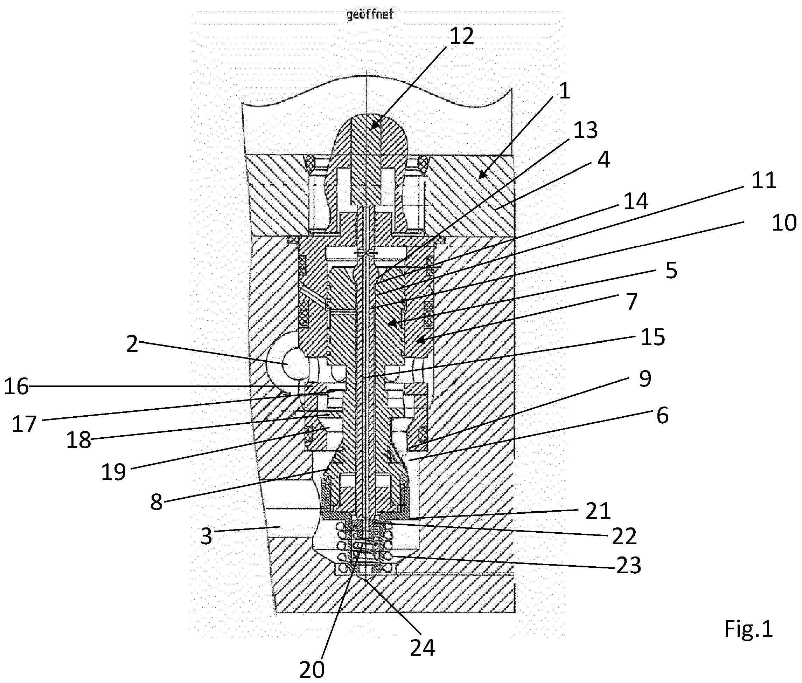

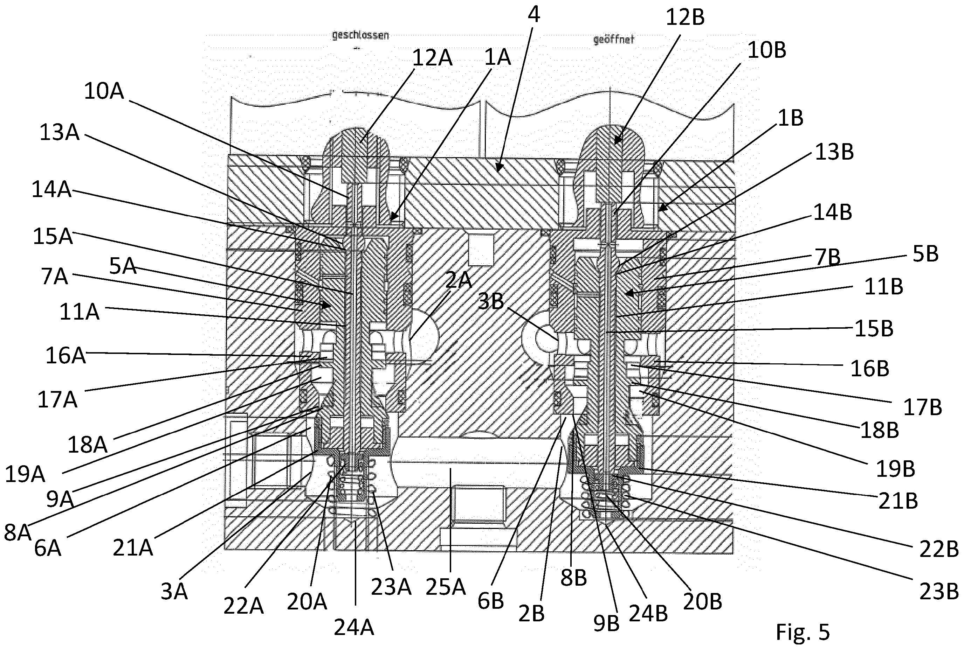

In den Figuren 1 bis 4 ist beispielhaft eine mögliche Ausführungsvariante eines erfindungsgemäßen elektrohydraulischen Steuerventils gezeigt, während Figur 5 eine Anordnung von zwei miteinander verschalteten elektrohydraulischen Steuerventilen beispielhaft darstellt.

Das in Figur 1 dargestellte elektrohydraulische Steuerventil 1 in Catrigdebauform ist im geöffneten Zustand dargestellt. Unabhängig von dem Schaltungszustand des Steuerventils bzw. Wegeventils 1 sind ein Zufluss 2 und ein Abfluss 3 in einem Gehäuseblock 4 vorgesehen. Ferner ist ein elektrisch ansteuerbarer Steuerkolben 5 vorgesehen, der in einer Gehäusebohrung 6 axial bewegbar ist. Der Gesamthub beträgt etwa nur etwa 3mm.

Zur Lagerung des Steuerkolbens 5 ist in die Gehäusebohrung 6 ein Hülseneinsatz 7 eingesetzt, in dem der Steuerkolben 5 axial bewegbar geführt ist. Der Steuerkolben 5 ist mit einem Ventilkegel 8 ausgeführt, der gegen einen in dem Hülseneinsatz 7 gebildeten Ventilsitz 9 steuerbar ist. Demzufolge wird durch entsprechende axiale Bewegung des Steuerkolbens 5 aus einem geschlossenen Zustand in einen geöffneten Zustand des Steuerkolbens 5 ein Spalt zum Durchströmen des Fluids zwischen dem Ventilkegel 8 und dem Ventilsitz 9 realisiert.

Um ein betriebsoptimiertes und kostengünstiges sowie konstruktiv einfach aufgebautes Steuerventil 1 zu realisieren, ist vorgesehen, dass ein Steuerstift 10 zur Ansteuerung des Steuerkolbens 5 in einer Axialbohrung 11 des Steuerkolbens 5 zumindest abschnittsweise relativ zum Steuerkolben 5 bewegbar angeordnet ist, wobei der federbelastete Steuerstift 10 mit einem Betätigungsantrieb 12 zum axialen Bewegen in Wirkverbindung steht. Als Betätigungsantrieb 12 kann beispielsweise ein Elektromagnet oder dergleichen vorgesehen sein.

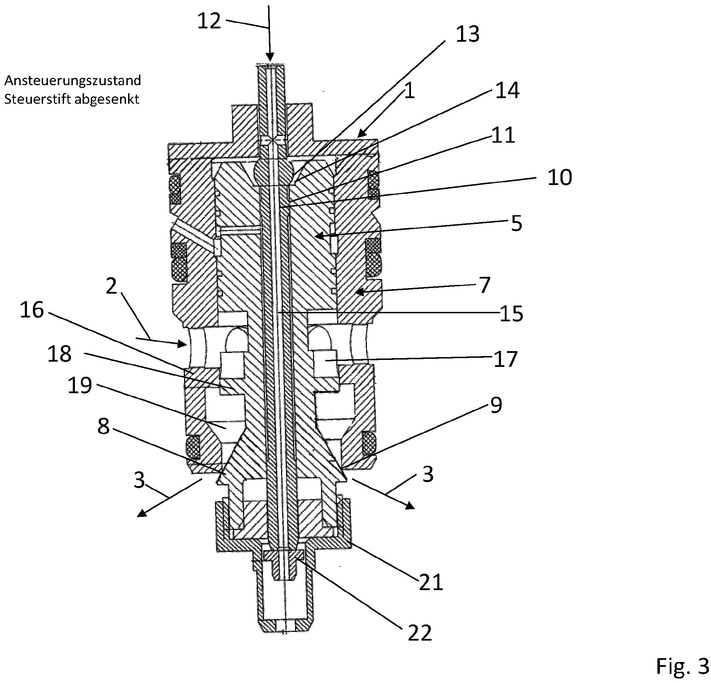

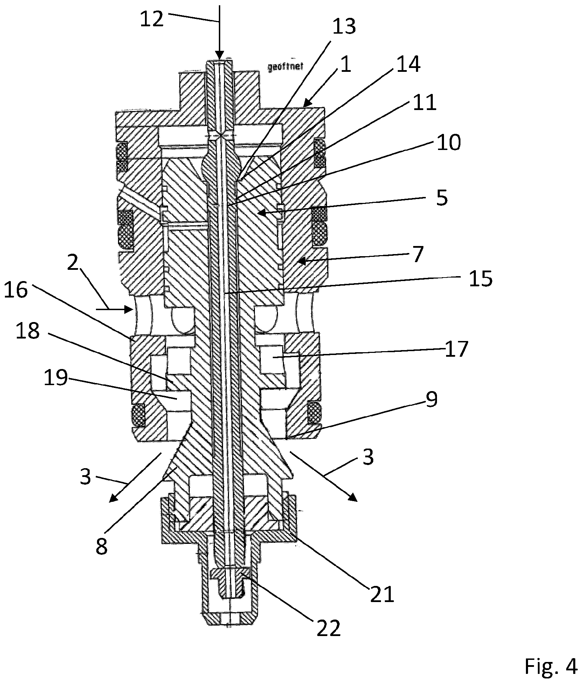

Der Steuerstift 10 weist einen Anlageabschnitt 13 zum axialen Anliegen an einem korrespondierenden Anlageabschnitt 14 des Steuerkolbens 5 auf. Dadurch kann der Steuerstift 10 zunächst zur Ansteuerung relativ zum Steuerkolben 5 axial bewegt werden, bis der Anlageabschnitt 13 des Steuerstiftes 5 spielfrei dichtend an dem korrespondierenden Anlageabschnitt 14 des Steuerkolbens 5 anliegt. Dieser Ansteuerungszustand mit abgesenkten Steuerstift 10 ist beispielhaft in Figur 3 dargestellt. Anschließend wird der Steuerstift 10 zusammen mit dem Steuerkolben 5 axial weiterbewegt, um eine geöffnete Position des Steuerkolbens 5 zu erreichen, welches beispielhaft in Figur 4 dargestellt ist. Der Steuerstift 10 weist eine axial verlaufende Durchgangsbohrung 15 zum Druckausgleich bzw. Kraftausgleich zwischen den druckbeaufschlagten Endbereichen des Steuerkolbens 5 auf.

Der in der Gehäusebohrung 6 eingesetzte Hülseneinsatzes 7 ist gehäusefest und bildet den Ventilsitz 9 für den korrespondierenden Ventilkegel 8 des Steuerkolbens 5. Der Steuerkolben 5 ist in dem Hülseneinsatz 7 axial bewegbar geführt, wobei der Hülseneinsatz 7 eine dem Zufluss 2 zugeordnete Steuerkante 16 aufweist, die mit einem Feinsteuernuten 17 aufweisenden Steuersteg 18 des Steuerkolbens 5 korrespondiert. Auf diese Weise wird ein einerseits durch den mit dem Ventilkegel 8 korrespondierender Ventilsitz 9 und andererseits durch die mit dem Steuersteg 18 korrespondierende Steuerkante 16 begrenzte Kammer 19 zwischen dem Innenumfang des Hülseneinsatzes 7 und dem Außenumfang des Steuerkolbens 5 gebildet. Durch diese Kammer 19 in Verbindung mit den Feinsteuernuten 17 wird die Steuerung des vorgeschlagenen elektrohydraulischen Steuerventils 1 weiter verbessert.

Ein dem Betätigungsantrieb 12 abgewandtes Ende des Steuerstiftes 10 steht mit einer ersten Rückstellfeder 20 in Wirkverbindung. Dadurch erfolgt eine durch den Betätigungsantrieb 12 erzeugte Axialbewegung gegen die Federkraft der ersten Rückstellfeder 20, sodass nach Abschluss der Betätigung automatisch eine Rückstellung des Steuerstiftes 10 erfolgt. Die erste Rückstellfeder 20 des Steuerstiftes 10 ist in einer lösbar an einem Ende des Steuerkolbens 5 befestigten Federkappe 21 angeordnet und axial abgestützt. Das zugeordnete Ende des Steuerstiftes 10 kann direkt oder über ein weiteres Bauteil mit der ersten Rückstellfeder 20 in Kontakt stehen. Bei der dargestellten Ausführung ist eine Hülse 22 vorgesehen, die von der ersten Rückstellfeder 20 abschnittsweise umgeben ist oder in der Hülse 22 abschnittsweise aufgenommen ist, wobei sich das zugeordnete Ende der ersten Rückstellfeder 20 an der Hülse 22 abstützt, während sich das andere Ende der ersten Rückstellfeder 20 in der Federkappe 21 abstützt.

Zur Rückstellung des Steuerkolbens 5 ist eine zweite Rückstellfeder 23 vorgesehen. Die zweite Rückstellfeder 23 ist einerseits axial an der Federkappe 21 des Steuerkolbens 5 und andererseits axial an dem Boden 24 der Gehäusebohrung 6 abgestützt. Die zweite Rückstellfeder 23 umgibt die Federkappe 21 abschnittsweise und ist koaxial zur Federkappe 21 angeordnet. Wie insbesondere aus Figur 1 in der geöffneten Stellung bzw. geöffneten Position des Steuerkolbens 5 des erfindungsgemäßen elektrohydraulischen Steuerventils 1 hervorgeht, ist die Federkappe 21 derart dem Abfluss 3 im Gehäuseblock 4 zugeordnet, dass ein durch den zwischen dem Ventilkegel 8 und dem Ventilsitz 9 gebildeten Spalt strömendes Fluid an der Federkappe 21 verwirbelungsfrei zum Abfluss 3 führbar ist. Dadurch werden unerwünschte Verwirbelungen beim Ausströmen in den Abfluss 3 verhindert.

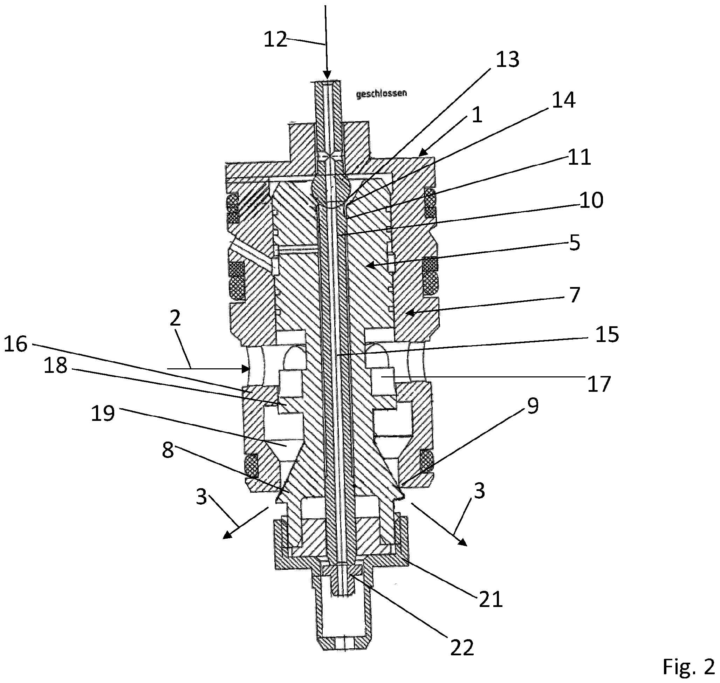

In den Figuren 2, 3 und 4 sind verschiedene Zustände anhand des elektrohydraulischen Steuerventils 1 beispielhaft dargestellt. Das elektrohydraulische Steuerventil 1 ist der Einfachheit halber ohne Gehäuseblock 4 und ohne Rückstellfedern 20, 23 dargestellt.

Figur 2 zeigt den geschlossenen Zustand des elektrohydraulischen Steuerventils 1 bzw. des Steuerkolbens 5. Im geschlossenen Zustand liegt der Ventilkegel 8 des Steuerkolbens 5 aufgrund der wirkenden Federkraft der zweiten Rückstellfeder 23 an dem korrespondierenden Ventilsitz 9 des Hülseneinsatzes 7 fluiddicht an, sodass der Ablauf 3 gegenüber der Kammer 19 abgedichtet ist. Ferner ist die Kammer 19 ebenfalls zum Zulauf 2 abgedichtet, da sich der Steuersteg 18 in Überdeckung mit der Steuerkante 16 des Hülseneinsatzes 7 befindet. Dieser geschlossene Zustand wird durch die Federkraft der nicht weiter dargestellten zweiten Rückstellfeder 23 gehalten. In dem geschlossenen Zustand befindet sich der Anlageabschnitt 13 des Steuerstiftes 10 nicht in Anlage mit dem Anlageabschnitt 14 des Steuerkolbens 5, sodass sich ein vorbestimmtes Axialspiel von etwa 0,2 mm zwischen dem Anlageabschnitt 13 des Steuerstiftes 10 und dem Anlageabschnitt 14 des Steuerkolbens 5 ergibt.

In Figur 3 ist ein Ansteuerungszustand gezeigt, bei dem der Steuerstift 10 gegen die Kraft der ebenfalls nicht weiter dargestellten ersten Rückstellfeder 20 relativ zum Steuerkolben 5 axial derart durch den Betätigungsantrieb 12 bewegt worden ist, dass der Anlageabschnitt 13 des Steuerstiftes 10 spielfrei dichtend an dem Anlageabschnitt 14 des Steuerkolbens 5 anliegt. In diesem Ansteuerungszustand, in dem der Steuerstift 10 abgesenkt worden ist, befindet sich das elektrohydraulische Steuerventil nach wie vor im geschlossenen Zustand, da der Zufluss 2 sowie die Kammer 19 und der Abfluss 3 in diesem Zustand nicht strömungsmäßig verbunden sind.

In Figur 4 ist der ebenfalls auch in Figur 1 dargestellte geöffnete Zustand des elektrohydraulischen Steuerventils 1 bzw. des Steuerkolbens 5 dargestellt. Ausgehend von dem Ansteuerungszustand wird weitere Betätigungskraft durch den Betätigungsantrieb 12 auf den Steuerstift 10 aufgebracht, der in Wirkverbindung mit dem Steuerkolben 5 steht, sodass der Steuerstift 10 gemeinsam mit dem Steuerkolben 5 axial und somit in der Zeichnungsebene nach unten weiter bewegt wird. Dadurch wird die Verbindung zwischen dem Zufluss 2 und dem Abfluss 3 geöffnet, sodass ein Fluidstrom durch das Steuerventil 1 erzeugt wird. Dieser Zustand ist in Figur 4 dargestellt, wobei auch bei dieser Darstellung auf die beiden Rückstellfedern 20, 23 verzichtet worden ist.

Wenn das Steuerventil 1 bzw. der Steuerkolben 5 wieder in seinen geschlossenen Zustand gebracht werden soll, wird bei dem vorgeschlagenen elektrohydraulischen Steuerventil 1 wieder der in Figur 3 dargestellte Ansteuerzustand eingenommen, indem der Steuerkolben 5 zusammen mit dem Steuerstift 10 axial zurück bewegt wird, bis der Steuerkolben 5 fluiddicht an dem Ventilsitz 9 des Steuerventils 1 anliegt. Da in dem Ansteuerzustand der Steuerstift 10 spielfrei an dem Steuerkolben 5 anliegt, wird in vorteilhafterweise verhindert, dass unerwünschte Schläge zwischen dem Ventilkegel 8 und dem Ventil 9 auftreten, da durch den Steuerstift 10 eine weitere Axialbewegung des Steuerkolbens 5 verhindert wird.

In Figur 5 ist eine erfindungsgemäße Anordnung mit einem ersten elektrohydraulischen Steuerventil 1A und einem zweiten elektrohydraulischen Steuerventil 1B in dem Gehäuseblock 4 quasi als Doppelblock dargestellt. Gleiche Bauteile werden mit den gleichen Bezugszeichen bezeichnet, wobei die Bezugszeichen des ersten elektrohydraulischen Steuerventils 1A zusätzlich mit dem Buchstaben A und die Bezugszeichen des zweiten elektrohydraulischen Steuerventils 1B zusätzlich mit dem Buchstaben B versehen sind.

Das erste elektrohydraulische Steuerventil 1A und das zweite elektrohydraulische Steuerventil 1B sind parallel nebeneinander in dem Gehäuseblock 4 bauraumsparend angeordnet. Ein Zufluss 2A des ersten elektrohydraulischen Steuerventils 1A ist mit einer nicht weiter dargestellten Pumpe verbunden. Ein Abfluss 3A des ersten elektrohydraulischen Steuerventils 1A ist mit einem ebenfalls nicht weiter dargestellten Verbraucher verbunden. Ein Zufluss 2B des zweiten elektrohydraulischen Steuerventils 1B ist ebenfalls mit dem Verbraucher beispielsweise über einen gemeinsamen Kanal 25 verbunden, wobei der gemeinsame Kanal 25 den Abfluss 3A des ersten elektrohydraulischen Steuerventils 1A und den Zufluss 2B des zweiten elektrohydraulischen Steuerventils 1B verbinden. Ein Abfluss 3B des zweiten elektrohydraulischen Steuerventils 1B ist mit einem nicht weiter dargestellten Tank verbunden.

Das erfindungsmäße Verfahren zum Öffnen und Schließen eines elektrohydraulischen Steuerventils 1 wird insbesondere anhand der Figuren 2 bis 4 erläutert. Das Verfahren sieht bei dem vorbeschriebenen elektrohydraulischen Steuerventil 1 einen Ansteuerzustand beim Öffnen und Schließen des Steuerventils 1 vor, um unerwünschte Schläge zwischen dem Ventilkegel 8 und dem Ventilsitz 9 zu verhindern. Im Detail ist vorgesehen, dass der Steuerstift 10 zum Öffnen des Steuerventils 1 zunächst axial relativ zum Steuerkolben 5 bewegt wird, bis ein Ansteuerzustand erreicht wird, bei dem der Anlageabschnitt 13 des Steuerstiftes 10 spielfrei und fluiddicht an dem Anlageabschnitt 14 des Steuerkolbens 5 anliegt und dass der Steuerkolben 5 über den Steuerstift 10 zum Öffnen axial weiter bewegt wird, bis sich das Steuerventil 1 im geöffneten Zustand befindet. Zum Schließen wird der Steuerkolben 5 mit dem Steuerstift 1 axial zurückbewegt, bis der Ventilkegel 8 an dem Ventilsitz 9 fluiddicht anliegt und dass anschließend der Steuerstift 10 aus dem Ansteuerzustand axial relativ zum Steuerkolben 5 weiter bewegt wird, bis ein vorbestimmtes Axialspiel zwischen dem Anlageabschnitt 13 des Steuerstiftes 10 und dem Anlageabschnitt 14 des Steuerkolbens 5 gegeben ist.

### Bezugszeichen

- 1: elektrohydraulisches Steuerventil
- 1A: erstes elektrohydraulisches Steuerventil
- 1B: zweites elektrohydraulisches Steuerventil
- 2,2A,2B: Zufluss des elektrohydraulischen Steuerventils
- 3,3A,3B: Abfluss des elektrohydraulischen Steuerventils
- 4: Gehäuseblock
- 5,5A,5B: Steuerkolben
- 6,6A,6B: Gehäusebohrung
- 7,7A,7B: Hülseneinsatz
- 8,8A,8B: Ventilkegel
- 9,9A,9B: Ventilsitz
- 10, 10A, 10B: Steuerstift
- 11, 11A, 11B: Axialbohrung
- 12,12A,12B: Betätigungsantrieb
- 13, 13A, 13B: Anlageabschnitt des Steuerstiftes
- 14,14A,14B: korrespondierender Anlageabschnitt des Steuerkolbens
- 15,15A,15B: Durchgangsbohrung
- 16,16A,16B: Steuerkante
- 17,17A,17B: Feinsteuernut
- 18,18A,18B: Steuersteg
- 19,19A,19B: Kammer
- 20,20A,20B: erste Rückstellfeder
- 21,21A,21B: Federkappe
- 22,22A,22B: Hülse
- 23,23A,23B: zweite Rückstellfeder
- 24,24A,24B: Boden
- 25: gemeinsamer Kanal

## Patentansprüche

1. Elektrohydraulisches Steuerventil (1) mit zumindest einem Zufluss (2) und einem Abfluss (3) in einem Gehäuseblock (4) und mit einem elektrisch ansteuerbaren Steuerkolben (5), der in einer Gehäusebohrung (6) axial bewegbar geführt ist, wobei der federbelastete Steuerkolben (5) mit einem Ventilkegel (8) gegen einen Ventilsitz (9) steuerbar ist, wobei zumindest ein Steuerstift (10) zur Ansteuerung in einer Axialbohrung (11) des Steuerkolbens (5) zumindest abschnittsweise relativ zum Steuerkolben (5) bewegbar angeordnet ist, wobei der federbelastete Steuerstift (10) mit einem Betätigungsantrieb (12) zum axialen Bewegen in Wirkverbindung steht, und wobei der Steuerstift (10) einen Anlageabschnitt (13) zum axialen Anliegen an einem korrespondierenden Anlageabschnitt (14) des Steuerkolbens (5) aufweist,
wobei der Steuerstift (10) zur Ansteuerung relativ zum Steuerkolben (5) axial bewegbar ist, bis der Anlageabschnitt (13) des Steuerstiftes (10) spielfrei dichtend an dem korrespondierenden Anlageabschnitt (14) des Steuerkolbens (5) anliegt, **dadurch gekennzeichnet, dass** der
Steuerstift (10) mit dem Steuerkolben (5) axial weiterbewegbar ist, um einen geöffneten Zustand des Steuerkolbens (5) zu erreichen und dass der Steuerstift (10) eine axial verlaufende Durchgangsbohrung (15) zum Druck- oder Kraftausgleich zwischen den druckbeaufschlagten Enden des Steuerkolbens (5) aufweist.

2. Elektrohydraulisches Steuerventil (1) nach Anspruch 1, **dadurch gekennzeichnet, dass** ein dem Betätigungsantrieb (12) abgewandtes Ende des Steuerstiftes (10) mit einer ersten Rückstellfeder (20) in Wirkverbindung steht.

3. Elektrohydraulisches Steuerventil (1) nach Anspruch 2, **dadurch gekennzeichnet, dass** die erste Rückstellfeder (20) des Steuerstiftes (10) in einer lösbar an einem Ende des Steuerkolbens (5) befestigten Federkappe (21) aufgenommen und axial abgestützt ist.

4. Elektrohydraulisches Steuerventil (1) nach Anspruch 3, **dadurch gekennzeichnet, dass** zumindest eine zweite Rückstellfeder (23) vorgesehen ist, wobei die zweite Rückstellfeder (23) einerseits axial an der Federkappe (21) des Steuerkolbens (5) und andererseits axial an dem Boden (24) der Gehäusebohrung (6) abgestützt ist.

5. Elektrohydraulisches Steuerventil (1) nach Anspruch 3 oder 4, **dadurch gekennzeichnet, dass** die Federkappe (21) zur verwirbelungsfreien Strömung eines durch einen zwischen dem Ventilkegel (8) und dem Ventilsitz (9) gebildeten Spalt strömenden Fluids derart dem Abfluss (3) im Gehäuseblock (4) zugeordnet ist, dass ein Umströmen der Rückstellfedern vermeidbar ist.

6. Elektrohydraulisches Steuerventil (1) nach einem der vorangehenden Ansprüche, **dadurch gekennzeichnet, dass** in der Gehäusebohrung (6) ein den Ventilsitz (9) bildender gehäusefester Hülseneinsatz (7) angeordnet ist, in dem der Steuerkolben (5) axial bewegbar geführt ist.

7. Elektrohydraulisches Steuerventil (1) nach Anspruch 6, **dadurch gekennzeichnet, dass** der Hülseneinsatz (7) eine dem Zufluss (2) zugeordnete Steuerkante (16) aufweist, die mit einem Feinsteuernuten (17) aufweisenden Steuersteg (18) des Steuerkolbens (5) korrespondiert und dass eine einerseits durch den mit dem Ventilkegel (8) korrespondierenden Ventilsitz (9) und andererseits durch die mit dem Steuersteg (18) korrespondierende Steuerkante (16) begrenzte Kammer (19) vorgesehen ist.

8. Anordnung mit zumindest einem ersten elektrohydraulischen Steuerventil (1A) und einem zweiten elektrohydraulischen Steuerventil (1B) nach einem der vorangehenden Ansprüche.

9. Anordnung nach Anspruch 8, **dadurch gekennzeichnet, dass** das erste elektrohydraulische Steuerventil (1A) und das zweite elektrohydraulische Steuerventil (1B) parallel nebeneinander in einem Gehäuseblock (4) angeordnet sind, wobei ein Zufluss (2A) des ersten elektrohydraulischen Steuerventils (1A) mit einer Pumpe und ein Abfluss (3A) des ersten elektrohydraulischen Steuerventils (1A) mit einem Verbraucher verbindbar ist und wobei ein Zufluss (2B) des zweiten elektrohydraulischen Steuerventils (1B) mit dem Verbraucher und ein Abfluss (3B) des zweiten elektrohydraulischen Steuerventils (1B) mit einem Tank verbindbar ist.

10. Verfahren zum Öffnen und Schließen eines elektrohydraulischen Steuerventils (1) nach einem der Ansprüche 1-7, **dadurch gekennzeichnet, dass** der Steuerstift (10) zum Öffnen des Steuerventils (1) zunächst axial relativ zum Steuerkolben (5) bewegt wird, bis ein Ansteuerzustand erreicht wird, bei dem der Anlageabschnitt (13) des Steuerstiftes (10) spielfrei und fluiddicht an dem Anlageabschnitt (14) des Steuerkolbens (5) anliegt und dass der Steuerkolben (5) über den Steuerstift (10) zum Öffnen axial weiter bewegt wird, bis sich das Steuerventil (1) im geöffneten Zustand befindet.

11. Verfahren nach Anspruch 10, **dadurch gekennzeichnet, dass** der Steuerkolben (5) zum Schließen mit dem Steuerstift (10) axial zurückbewegt wird, bis der Ventilkegel (8) an dem Ventilsitz (9) fluiddicht anliegt und dass anschließend der Steuerstift (10) aus dem Ansteuerzustand axial relativ zum Steuerkolben (5) weiter bewegt wird, bis ein vorbestimmtes Axialspiel zwischen dem Anlageabschnitt (13) des Steuerstiftes (10) und dem Anlageabschnitt (14) des Steuerkolbens (5) gegeben ist.

## Claims

1. An electrohydraulic control valve (1) having at least one inflow (2) and one outflow (3) in a housing block (4) and having an electrically actuatable control piston (5), which is guided in an axially movable manner in a housing bore (6), the spring-loaded control piston (5) being controllable with a valve cone (8) against a valve seat (9), at least one control pin (10) for actuation being arranged movably relative to the control piston (5) at least in some sections in an axial bore (11) of the control piston (5), the spring-loaded control pin (10) being operatively connected to an operating drive (12) for axial movement, and the control pin (10) having a bearing section (13) for bearing axially against a corresponding bearing section (14) of the control piston (5), the control pin (10) for actuation being axially movable relative to the control piston (5) until the bearing section (13) of the control pin (10) bears sealingly and without clearance against the corresponding bearing section (14) of the control piston (5),
**characterised in that**
the control pin (10) with the control piston (5) can be moved axially further to achieve an open state of the control piston (5), and that the control pin (10) has an axially running through-bore (15) for equalising the pressure or force between the pressurised ends of the control piston (5).

2. The electrohydraulic control valve (1) according to Claim 1, **characterised in that** an end of the control pin (10) facing away from the operating drive (12) is operatively connected to a first restoring spring (20).

3. The electrohydraulic control valve (1) according to Claim 2, **characterised in that** the first restoring spring (20) of the control pin (10) is received in a spring cap (21) fastened detachably to an end of the control piston (5) and is supported axially.

4. The electrohydraulic control valve (1) according to Claim 3, **characterised in that** at least one second restoring spring (23) is provided, wherein the second restoring spring (23) is supported axially on the spring cap (21) of the control piston (5) on one side and axially on the bottom (24) of the housing bore (6) on the other side.

5. The electrohydraulic control valve (1) according to Claim 3 or 4, **characterised in that** for turbulence-free flow of a fluid flowing through a gap formed between the valve cone (8) and the valve seat (9), the spring cap (21) is assigned to the outflow (3) in the housing block (4) such that flow can be prevented from passing around the restoring springs.

6. The electrohydraulic control valve (1) according to any one of the preceding claims, **characterised in that** a sleeve insert (7), which forms the valve seat (9) and is fixed to the housing and in which the control piston (5) is guided in an axially movable manner, is arranged in the housing bore (6).

7. The electrohydraulic control valve (1) according to Claim 6, **characterised in that** the sleeve insert (7) has a control edge (16) which is assigned to the inflow (2) and corresponds to a control ridge (18), having fine-control grooves (17), of the control piston (5), and that a chamber (19) is provided which is delimited on one side by the valve seat (9) corresponding to the valve cone (8) and on the other side by the control edge (16) corresponding to the control ridge (18).

8. An assembly having at least a first electrohydraulic control valve (1A) and a second electrohydraulic control valve (1B) according to any one of the preceding claims.

9. The assembly according to Claim 8, **characterised in that** the first electrohydraulic control valve (1A) and the second electrohydraulic control valve (1B) are arranged in parallel next to each other in a housing block (4), wherein an inflow (2A) of the first electrohydraulic control valve (1A) can be connected to a pump, and an outflow (3A) of the first electrohydraulic control valve (1A) can be connected to a consumer, and wherein an inflow (2B) of the second electrohydraulic control valve (1B) can be connected to the consumer, and an outflow (3B) of the second electrohydraulic control valve (1B) can be connected to a tank.

10. A method for opening and closing an electrohydraulic control valve (1) according to any one of Claims 1-7, **characterised in that** to open the control valve (1), the control pin (10) is first moved axially relative to the control piston (5) until an actuation state is achieved in which the bearing section (13) of the control pin (10) bears without clearance and in a fluid-tight manner against the bearing section (14) of the control piston (5), and that, for opening, the control piston (5) is moved axially further over the control pin (10) until the control valve (1) is in the open state.

11. The method according to Claim 10, **characterised in that** for closing, the control piston (5) is moved back axially with the control pin (10) until the valve cone (8) bears in a fluid-tight manner against the valve seat (9), and that the control pin (10) is then moved further axially relative to the control piston (5), out of the actuation state, until there is a predefined axial clearance between the bearing section (13) of the control pin (10) and the bearing section (14) of the control piston (5).

## Revendications

1. Vanne de commande électrohydraulique (1) avec au moins une entrée (2) et une sortie (3) dans un bloc de boîtier (4) et avec un piston de commande (5) à pilotage électrique qui est guidé par déplacement axial dans un perçage de boîtier (6), le piston de commande (5) sollicitable par ressort étant pilotable avec un cône de vanne (8) contre un siège de vanne (9), au moins une tige de commande (10) pour le pilotage dans un perçage axial (11) du piston de commande (5) étant disposée de manière mobile au moins par section par rapport au piston de commande (5), la tige de commande (10) sollicitable par ressort étant en liaison fonctionnelle avec un mécanisme d'actionnement (12) pour le déplacement axial, et la tige de commande (10) présentant une section de contact (13) pour le contact axial au niveau d'une section de contact (14) concordante du piston de commande (5), la tige de commande (10) pour le pilotage par rapport au piston de commande (5) étant axialement déplaçable jusqu'à ce que la section de contact (13) de la tige de commande (10) soit en contact de manière étanche sans jeu au niveau de la section de contact (14) concordante du piston de commande (5), **caractérisée en ce que**
la tige de commande (10) est axialement déplaçable plus loin avec le piston de commande (5) afin d'atteindre un état ouvert du piston de commande (5) et **en ce que** la tige de commande (10) présente un perçage traversant (15) s'étendant axialement pour la compensation de la pression ou de la force entre les extrémités du piston de commande (5) soumises à la pression.

2. Vanne de commande électrohydraulique (1) selon la revendication 1, **caractérisée en ce qu'**une extrémité opposée au mécanisme d'actionnement (12) de la tige de commande (10) est en liaison fonctionnelle avec un premier ressort de rappel (20).

3. Vanne de commande électrohydraulique (1) selon la revendication 2, **caractérisée en ce que** le premier ressort de rappel (20) de la tige de commande (10) est logée dans une calotte de ressort (21) fixée de manière détachable à une extrémité du piston de commande (5) et est supporté de manière axiale.

4. Vanne de commande électrohydraulique (1) selon la revendication 3, **caractérisée en ce qu'**au moins un deuxième ressort de rappel (23) est prévu, le deuxième ressort de rappel (23) étant supporté axialement sur un côté au niveau de la calotte de ressort (21) du piston de commande (5) et axialement sur un autre côté au niveau du fond (24) du perçage de boîtier (6).

5. Vanne électrohydraulique (1) selon la revendication 3 ou 4, **caractérisée en ce que** la calotte de ressort (21) est associée à la sortie (3) dans le bloc de boîtier (4) pour l'écoulement sans tourbillon d'un fluide s'écoulant à travers une fente formée entre le cône de vanne (8) et le siège de vanne (9) de sorte qu'un écoulement contournant les ressorts de rappel puisse être évité.

6. Vanne électrohydraulique (1) selon l'une quelconque des revendications précédentes, **caractérisée en ce qu'**un élément de manchon (7) non mobile dans le boîtier et formant le siège de vanne (9) est disposé dans le perçage du boîtier (6), le piston de commande (5) étant guidé par déplacement axial dans ledit élément.

7. Vanne électrohydraulique (1) selon la revendication 6, **caractérisée en ce que** l'élément de manchon (7) présente une arête de commande (16) associée à l'entrée (2) qui concorde avec une barrette de commande (18) du piston de commande (5) présentant des rainures de commande minces (17), et **en ce qu'**une chambre (19) limitée sur un côté par le siège de vanne (9) concordant avec le cône de vanne (8) et sur un autre côté par l'arête de commande (16) concordant avec la barrette de commande (18) est prévue.

8. Dispositif avec au moins une première vanne de commande électrohydraulique (1A) et une deuxième vanne de commande électrohydraulique (1B) selon l'une quelconque des revendications précédentes.

9. Dispositif selon la revendication 8, **caractérisé en ce que** la première vanne de commande électrohydraulique (1A) et la deuxième vanne de commande électrohydraulique (1B) sont disposées parallèlement l'une à côté de l'autre dans un bloc de boîtier (4), une entrée (2A) de la première vanne de commande électrohydraulique (1A) étant raccordable à une pompe et une sortie (3A) de la première vanne de commande électrohydraulique (1A) étant raccordable à un consommateur, et une entrée (2B) de la deuxième vanne de commande électrohydraulique (1B) étant raccordable au consommateur et une sortie (3B) de la deuxième vanne de commande électrohydraulique (1B) étant raccordable à un réservoir.

10. Procédé pour ouvrir et fermer une vanne de commande électrohydraulique (1) selon l'une quelconque des revendications 1 à 7, **caractérisé en ce que** la tige de commande (10) est déplacée tout d'abord axialement par rapport au piston de commande (5) pour ouvrir la vanne de commande (1) jusqu'à ce qu'un état de pilotage soit atteint dans lequel la section de contact (13) de la tige de commande (10) est en contact sans jeu et de manière étanche aux fluides au niveau de la section de contact (14) du piston de commande (5) et **en ce que** le piston de commande (5) est déplacé axialement plus loin par la tige de commande (10) jusqu'à ce que la vanne de commande (1) se retrouve en l'état ouvert.

11. Procédé selon la revendication 10, **caractérisé en ce que** pour la fermeture, le piston de commande (5) est reculé axialement avec la tige de commande (10) jusqu'à ce que le cône de vanne (8) soit en contact étanche aux fluides au niveau du siège de vanne (9) et **en ce qu'**ensuite, la tige de commande (10) est sortie de l'état de pilotage en continuant le déplacement axial par rapport au piston de commande (5) jusqu'à ce qu'un jeu axial prédéterminé existe entre la section de contact (13) de la tige de commande (10) et la section de contact (14) du piston de commande (5).
